# EUROPÄISCHE PATENTANMELDUNG

(11) **EP 4 763 746 A1**
(43) Veröffentlichungstag der Anmeldung: **24.06.2026**
(21) Anmeldenummer: 25217615.1
(22) Anmeldetag: 21.11.2025
(51) Int. Cl.: B65G 1/04, H01F 7/04

(54) **SHUTTLESCHRANKE, SOWIE SHUTTLE FÜR EIN SHUTTLESYSTEM**

(30) Priorität: 18.12.2024 DE 202024107409 U; 30.01.2025 DE 102025103473
(71) Anmelder: Kendrion (Donaueschingen/Engelswies) GmbH, 78166 Donaueschingen (DE)
(72) Erfinder: BAUER, Ernst, 88605 Meßkirchen (DE); SESSLER, Benjamin, 72514 Inzigkofen (DE)
(74) Vertreter: Westphal, Mussgnug & Partner Patentanwälte mbB

(57) **Zusammenfassung**

Shuttleschranke (1) für ein Shuttlesystem (3) umfassend:
- ein elektromagnetisches Erregersystem (10), aufweisend ein Magnetjoch (12) mit einem Luftspalt (18) und eine bestrombare Erregerspule (15)
- ein Gehäuse (20),
- eine Welle (25) mit mindestens einem diametral magnetisierten Permanentmagneten (28) und einem auf der Welle (25) drehfest angeordneten Mitnehmerhebel (30) mit einem ersten Endanschlag (38) und einem zweiten Endanschlag (39),
- wobei die Welle (25) an dem Gehäuse (20) drehbar gelagert ist und den mindestens einen Permanentmagneten (28) in dem Luftspalt (18) angeordnet hält,
- wobei an dem Gehäuse (20) ein Anschlag (40) angeordnet ist, durch den eine Drehung des Mitnehmerhebels (30) von einer ersten Lage (A) in eine zweite Lage (B) begrenzt ist,
- wobei der Mitnehmerhebel (30) in der ersten Lage (A) und in der zweiten Lage (B) permanentmagnetisch gehalten ist und
wobei in der ersten Lage (A) der erste Endanschlag (38) an dem Anschlag (40) anliegt und in der zweiten Lage (B) der zweite Endanschlag (39) an dem Anschlag (21) anliegt

## Beschreibung

Die vorliegende Erfindung betrifft eine Shuttleschranke mit den Merkmalen des Patentanspruchs 1 und ein Shuttle mit einer erfindungsgemäßen Shuttleschranke gemäß Patentanspruch 15.

Shuttlesysteme sind aus dem Stand der Technik in unterschiedlichen Ausführungsformen bekannt und werden in großem Umfang für die Ein- und Auslagerung von Gebinden, z. B. Kartons, Behältern oder Tablaren, in einem automatischen Teilelager eingesetzt. Shuttlesysteme können für Auftragszusammenführungspuffer, Kommissionierung, Sequenzierung und andere Anwendungen eingesetzt werden. Shuttlesysteme bestehen aus autonomen Transportfahrzeugen, sogenannten Shuttles, die über ein angetriebenes Flurfahrwerk verfügen und sich entlang einer Bahn, z. B. einer Schienenführung, bewegen können. Die Shuttles verfügen über einen Aufnahmebereich, in dem das Packstück für den Transport angeordnet werden kann.

Zum Be- und Entladen des Shuttles ist das Shuttle mit ausfahrbaren Teleskopschienen ausgestattet, mit denen das Packstück von einem Abstellplatz in den Aufnahmebereich bzw. vom Aufnahmebereich in den Abstellplatz bewegt werden kann. Um das Packstück dabei zu sichern, sind im Stand der Technik verbreitet Shuttleschranken als mechanische Sperren mit einem Mitnehmerhebel vorgesehen, durch den das Packstück gegenüber den Teleskopschienen so gesichert wird, dass es der Bewegung der Teleskopschienen folgt. Der Mitnehmerhebel sichert somit einerseits das Packstück und andererseits kann der Mitnehmerhebel das Packstück hintergreifen, um es beispielsweise vom Abstellplatz in den Aufnahmebereich zu ziehen.

Derartige Shuttleschranken sind aus dem Stand der Technik in unterschiedlichen Ausführungsformen bekannt und weisen typischerweise einen mittels eines elektrischen Antriebs über ein Getriebe verschwenkbaren Mitnehmerhebel auf, der als mechanische Sperre das Packgut festhält, zieht oder schiebt.

Als nachteilig an diesem Stand der Technik hat sich erwiesen, dass Elektromotoren mit Getrieben zur mechanischen Betätigung des Mitnehmerhebels verwendet werden. Derartige Elektromotoren haben sich in der Vergangenheit vielseitig bewährt und weisen dennoch den Nachteil auf, dass die Schaltzeiten zwischen einer ersten Lage z.B. der Offenstellung und einer zweiten Lage - der Sperrstellung - lang sind und es in dem Ablauf des Shuttlesystems zu unnötigen Verzögerungen kommt. Aufgrund der Vielzahl von verwendeten Bauteilen in solchen Shuttleschranken sind diese in der Herstellung und Verwendung kostenintensiv und darüber hinaus benötigen sie einen nicht zu vernachlässigende Bauraum.

Hier setzt die vorliegende Erfindung an.

Es ist daher die Aufgabe der vorliegenden Erfindung, die aus dem Stand der Technik bekannten Shuttleschranken in zweckmäßiger Weise zu verbessern, um so eine verbesserte Shuttleschranke für ein Shuttle bereitzustellen, die einerseits innerhalb kürzester Zeit das Packstück freigeben und sperren kann und eine kleine bzw. kompakte Bauweise aufweist. Die Shuttleschranke soll zur Sicherheit und Zuverlässigkeit des Shuttlesystems beitragen und in bereits vorhandenen Shuttlesystemen aufgrund der kleinen und kompakten Bauweise unkompliziert und einfach nachgerüstet werden können. Ältere Shuttleschranken können leicht und unkompliziert ausgetauscht werden.

Diese Aufgaben werden mittels einer Shuttleschranke mit den Merkmalen des Patentanspruchs 1 gelöst sowie durch ein Shuttle mit den Merkmalen des Patentanspruchs 15.

Weitere vorteilhafte Weiterbildungen der Erfindung werden in den Unteransprüchen angegeben.

Die erfindungsgemäße Shuttleschranke mit den Merkmalen des Patentanspruchs 1 für eines Shuttlesystems umfasst ein elektromagnetisches Erregersystem mit einer bestrombaren Erregerspule und ein einen Luftspalt aufweisendes Magnetjoch, die einen Magnetkreis bilden.

Weiterhin weist die Shuttleschranke ein Gehäuse, eine Welle, mindestens einen diametral magnetisierten Permanentmagneten und einen Mitnehmerhebel auf.

Der Mitnehmerhebel weist einen ersten Endanschlag und einen zweiten Endanschlag auf, wobei der erste Endanschlag und der zweite Endanschlag in Umlaufrichtung der Welle auf gegenüberliegenden Seiten angeordnet sind.

Die Welle ist an dem Gehäuse drehbar gelagert und der Mitnehmerhebel und der Permanentmagnet sind drehfest auf der Welle angeordnet. Die Welle hält den mindestens einen Permanentmagneten in dem Luftspalt derart angeordnet, dass der magnetische Fluss durch das Magnetjoch fließt.

Darüber hinaus ist an dem Gehäuse ein Anschlag angeordnet, der mit den Endanschlägen des Mitnehmerhebels zusammenwirken kann und eine Drehung des Mitnehmerhebels zwischen einer ersten Lage in eine zweite Lage begrenzt. Ein Winkel zwischen dem ersten Endanschlag und dem zweiten Endanschlag gibt den Winkel des Mitnehmerhebels zwischen der ersten Lage und der zweiten Lage vor.

Der Mitnehmerhebel kann in der ersten Lage und in der zweiten Lage permanentmagnetisch gehalten werden, wobei in der ersten Lage der erste Endanschlag an dem Anschlag anliegt und in der zweiten Lage der zweite Endanschlag an dem Anschlag anliegt.

Die vorliegende Erfindung beruht auf der Idee eine sehr kompakte Shuttleschranke vorzuschlagen, die eine sehr hohe Lebensdauer, insbesondere gegenüber herkömmlichen elektrischen Motoren mit Getriebe, aufweist. Durch das elektromagnetische Erregersystem ist die vorschlaggemäße Shuttleschranke schneller als herkömmliche, mit elektrischen Motoren betriebene Schranken und ist weniger wartungsintensiv.

Der mindestens eine Permanentmagnet ist folglich in dem Luftspalt des Magnetkreises gehalten, wobei in Abhängigkeit von der Bestromung der Erregerspule der mindestens eine Permanentmagnet die Welle um ihre Längsachse in die eine oder die entgegengesetzte andere Richtung dreht. So wird in Abhängigkeit von der Bestromung der Erregerspule der Mitnehmerhebel entweder in die erste Lage oder in die zweite Lage bewegt, wobei der Endanschlag die Bewegung des Mitnehmerhebels beschränkt.

Die Bestromung erfolgt mittels einer Konstantstromquelle, wobei die Drehung der Welle um die Längsachse von der ersten Lage zu der zweiten Lage durch eine Bestromung der Erregerspule in eine erste Stromrichtung erfolgt und die Drehung der Welle um die Längsachse von der zweiten Lage zurück zu der ersten Lage in eine zweite Stromrichtung erfolgt.

Der Wechsel der Stromrichtung kann durch ein Vertauschen bzw. Umpolen der Plus-/Minus-Pole der Konstantstromquelle erfolgen.

Es ist besonders bevorzugt, wenn die Längsachse der Welle senkrecht zu Feldlinien in dem Luftspalt ausgerichtet ist. Im stromlosen Zustand der Erregerspule bildet der Luftspalt in dem Magnetkreis offene Pole, durch die eine Haltekraft erzeugt ist.

Eine Weiterbildung der Erfindung sieht vor, dass der Mitnehmerhebel in eine erste Befestigungsrichtung und in eine zweiten Befestigungsrichtung an der Welle anbringbar ist. Bevorzugt ist der Mitnehmerhebel in einer ersten Befestigungsrichtung und in einer zweiten Befestigungsrichtung auf die Welle aufsteckbar.

Somit kann ein- und dieselbe Shuttleschranke für unterschiedliche Positionierungen an dem Shuttle verwendet werden. Durch die Befestigungsrichtung kann bestimmt werden, obder Mitnehmerhebel von der ersten Lage in die zweite Lage im Uhrzeigersinn oder gegen den Uhrzeigersinn ausgeschwenkt wird. Anders ausgedrückt kann durch die Befestigungsrichtung bestimmt werden, ob der Mitnehmerhebel nach rechts oder links ausschwenkt.

Darüber hinaus hat es sich als vorteilhaft erwiesen, wenn der Anschlag an dem Gehäuse in einer ersten Position und einer zweiten Position anordnenbar ist. Der Anschlag ist vorzugsweise ein Bolzen oder Stift, der entweder in der ersten Position oder in der zweiten Position an dem Gehäuse anordnenbar ist. Der Bolzen oder Stift kann z. B. mit einem Befestigungselement, z. B. einer Schraube, am Gehäuse befestigt werden.

In einer ersten Konfiguration kann der Mitnehmerhebel in der ersten Befestigungsrichtung auf der Welle angeordnet sein und der Endanschlag kann in der ersten Position angeordnet sein. In einer zweiten Konfiguration kann der Mitnehmerhebel in der zweiten Befestigungsrichtung auf der Welle angeordnet sein und der Endanschlag kann in der zweiten Position angeordnet sein. Es ist vorteilhaft, wenn in der ersten Konfiguration der Mitnehmerhebel in der ersten Lage und in der zweiten Lage spiegelverkehrt zu dem Mitnehmerhebel in der ersten Lage und in der zweiten Lage der zweiten Konfiguration angeordnet ist.

Darüber hinaus hat es sich als Vorteilhaft erwiesen, wenn der Mitnehmerhebel und das Erregersystem auf gegenüberliegenden Seiten des Gehäuses angeordnet sind. Dadurch ergibt sich eine sehr kompakte Bauweise.

Auch ist es bevorzugt, wenn der Mitnehmerhebel mindestens ein Befestigungsmittel aufweist, durch das der Mitnehmerhebel auf der Welle befestigt ist. Durch das mindestens eine Befestigungsmittel kann der Mitnehmerhebel in der ersten Befestigungsrichtung und der zweiten Befestigungsrichtung verliersicher auf der Welle angeordnet werden.

Darüber hinaus ist es bevorzugt, wenn an dem Gehäuse mindestens ein Sensor angeordnet ist, durch den erfasst werden kann, ob der Mitnehmerhebel in der ersten Lage und/oder in der zweiten Lage angeordnet ist.

Vorteilhafter Weise ist der mindestens eine Sensor ein Hall-Sensor.

Der Mitnehmerhebel kann mindestens eine entsprechende Ausnehmung aufweisen, die mit dem mindestens einen Sensor zusammenwirken kann. Beispielsweise kann die entsprechende Ausnehmung über dem mindestens einen Sensor in der ersten Lage und/oder der zweiten Lage positioniert sein, wodurch eine sensorische Erfassung der ersten Lage und/oder zweiten Lage durch den mindestens einen Sensor ermöglicht ist.

Bevorzugter Weise weist der Mitnehmerhebel zwei Ausnehmungen auf, die auf gegenüberliegenden Seiten angeordnet sind. So kann eine sensorische Erfassung der ersten Lage und/oder der zweiten Lage unabhängig von der Befestigungsrichtung erfasst werden.

Eine weitere vorteilhafte Ausgestaltung der vorliegenden Erfindung sieht vor, dass der mindestens eine Permanentmagnet ein diametral magnetisierter Kreis- oder Ringmagnet ist. Der mindestens eine Permanentmagnet ist entweder ringförmig auf die Welle koaxial aufgesetzt oder als Vollzylinder an der Welle angeordnet und wird möglichst vollständig bzw. zentrisch in dem Luftspalt des Magnetkreises gehalten.

Unter einer diametralen Magnetisierung ist dabei zu verstehen, dass eine Ebene zwischen dem Nordpol und dem Südpol ausgebildet ist, die in oder annähernd in der Längsachse der Welle angeordnet ist. Der mindestens eine Permanentmagnet kann aus einer Vielzahl von Einzelpermanentmagneten gebildet sein, wobei die Einzelpermanentmagnete beispielsweise aus Neodym oder Ferrit hergestellt sein können.

Nach Maßgabe einer weiteren bevorzugten Ausgestaltung gibt die diametrale Magnetisierung des mindestens einen Permanentmagneten eine Ebene zwischen dem Nord- und dem Südpol vor, wobei die Ebene in der ersten Lage der Welle und in der zweiten Lage der Welle zu dem magnetischen Fluss Φ in einem Winkel α geneigt in dem Luftspalt gehalten ist. Unter geneigt ist im Zusammenhang mit dieser Erfindung zu verstehen, dass die Ebene weder senkrecht noch parallel zu den Feldlinien - anders ausgedrückt weder horizontal noch vertikal - in dem Luftspalt in der ersten Lage und in der zweiten Lage ausgerichtet ist.

Besonders bevorzugt ist es, wenn der Winkel der Ebene zwischen 15° und 75° zu einer Ebene geneigt ist, in der die Feldlinien des magnetischen Flusses in dem Luftspalt idealerweise verlaufen. Diese Ebene entspricht typischerweise ebenfalls einer Ebene, in der der Magnetkreis bzw. das Magnetjoch und die Erregerspule angeordnet sind.

Insbesondere hat es sich als vorteilhaft erwiesen, wenn mindestens eines von den den Luftspalt bildenden freien Enden des Magnetkerns eine kreissegmentförmige Ausnehmung aufweist. Durch die kreissegmentförmige Ausnehmung ist der Spalt zwischen dem mindestens einen Permanentmagneten und dem Magnetjoch bereichsweise konstant gehalten, wodurch die Reluktanz in dem Luftspalt zwischen dem freien Ende und dem Permanentmagneten minimiert ist. Bevorzugt ist ein Abstand zwischen dem Permanentmagnet und den freien Enden des Magnetjochs in Umlaufrichtung des Permanentmagneten konstant.

Eine weitere vorteilhafte Ausgestaltung der vorliegenden Erfindung sieht vor, dass die kreissegmentförmige Ausnehmung sich über einen Teilkreis von mindestens 45° und weniger als 90° erstreckt. Der Teilkreis kann einen konstanten Radius aufweisen, wobei der Radius des Teilkreises größer ist, als ein Radius des kreis- oder ringförmigen Permanentmagneten.

Eine Weiterbildung der vorliegenden Erfindung sieht vor, dass das Gehäuse und/oder die Welle aus einem nicht magnetischen Werkstoff hergestellt sind bzw. ist.

Darüber hinaus betrifft die vorliegende Erfindung ein Shuttle zum Transportieren von Packstücken auf einem Ladebereich mit mindestens einer erfindungsgemäßen Shuttleschranke.

Gemäß einer Weiterbildung weist das Shuttle mindestens eine Teleskopschiene auf, wobei die mindestens eine Teleskopschiene bevorzugt seitlich neben dem Ladebereich angeordnet ist. Bevorzugt ist auf gegenüberliegenden Seiten des Ladebereichs jeweils eine Teleskopschiene angeordnet. Die mindestens eine Teleskopschiene kann motorisch ein- und ausgefahren werden.

Weiterhin hat es sich als vorteilhaft erwiesen, wenn die mindestens eine Teleskopschiene an einem freien Ende die mindestens eine Shuttleschranke aufweist.

Ein weiterer Aspekt der vorliegenden Erfindung betrifft ein Shuttlesystem mit mindestens einem erfindungsgemäßen Shuttle.

Nachfolgend wird unter Bezugnahme auf die begleitenden Zeichnungen ein erfindungsgemäßes Ausführungsbeispiel einer erfindungsgemäßen Shuttleschranke mit einem elektromagnetischen Stellantrieb und einem Beschickungshebel eines Shuttlesystems im Detail erläutert. Es zeigen:
- Figur 1: eine perspektivische Darstellung einer Shuttleschranke mit einem elektromagnetischen Erregersystem und einem durch das elektromagnetische Erregersystem bewegbaren Mitnehmerhebel,
- Figur 2: eine Draufsicht auf die Shuttleschranke gemäß Figur 1, wobei der Mitnehmerhebel in einer ersten Lage angeordnet ist,
- Figur 3: eine Draufsicht auf die Shuttleschranke gemäß Figur 1, wobei der Mitnehmerhebel in einer zweiten Lage angeordnet ist,
- Figur 4: eine Draufsicht auf die Shuttleschranke analog zu Figur 2 gemäß einer zweiten Konfiguration, wobei der Mitnehmerhebel in einer ersten Lage angeordnet ist, und
- Figur 5: eine Schnittdarstellung des elektromagnetischen Erregersystems.

Gleiche oder funktional gleiche Teile oder Merkmale werden in der nachfolgenden detaillierten Beschreibung der Figuren mit den gleichen Bezugszeichen gekennzeichnet. Ebenso sind in den Figuren nicht alle gleichen oder funktional gleichen Teile oder Merkmale mit einer Bezugsziffer versehen.

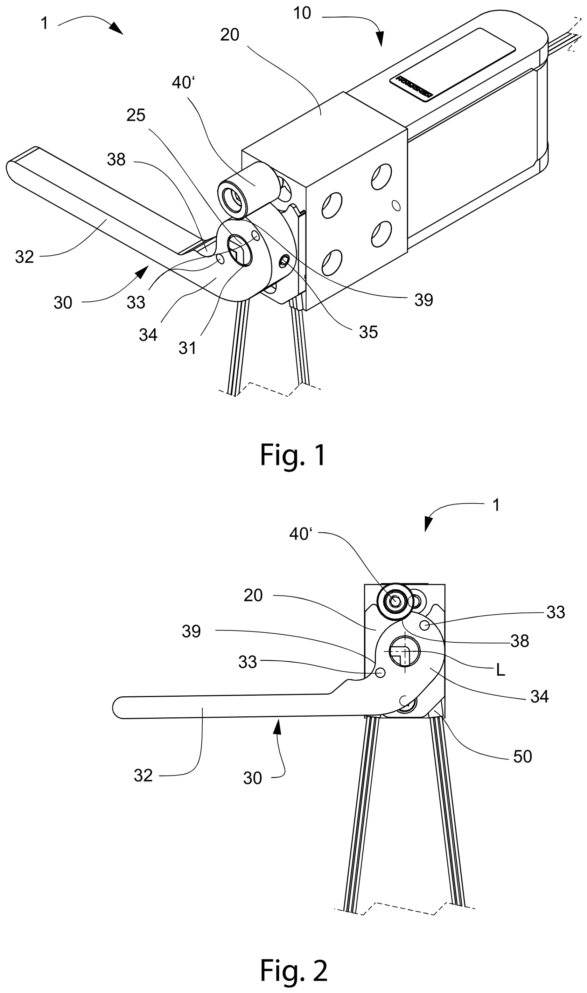

Figur 1 zeigt eine beispielhafte Ausführungsform einer Shuttleschranke 1 eines nicht dargestellten Shuttles 2 mit einem elektromagnetischen Erregersystem 10.

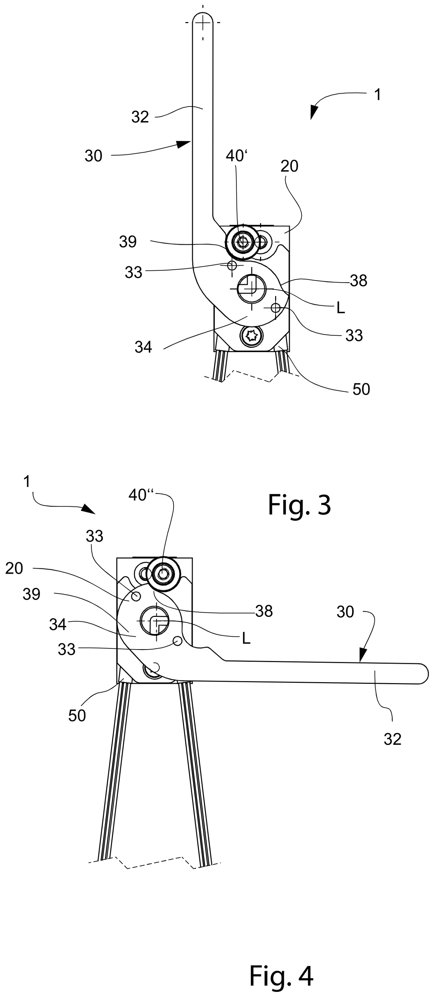

Die Shuttleschranke 1 kann gemäß den Figuren 1 bis 3 gemäß einer ersten Konfiguration oder gemäß Figur 4 gemäß einer zweiten Konfiguration ausgebildet sein, wobei zunächst die Shuttleschranke 1 anhand der Figuren 1 bis 3 beschrieben wird und anschließend unter Bezugnahme auf die Figur 4 der Unterschied zwischen der ersten Konfiguration und der zweiten Konfiguration beschrieben wird.

Die Shuttleschranke 1 gemäß dem dargestellten Ausführungsbeispiel umfasst ein elektromagnetisches Erregersystem 10, ein Gehäuse 20, eine Welle, einen Permanentmagnet 28 und einen Mitnehmerhebel 30.

Das elektromagnetische Erregersystem 10 weist ein Magnetjoch 12 mit einem Luftspalt 18 und eine bestrombare Erregerspule 15 auf.

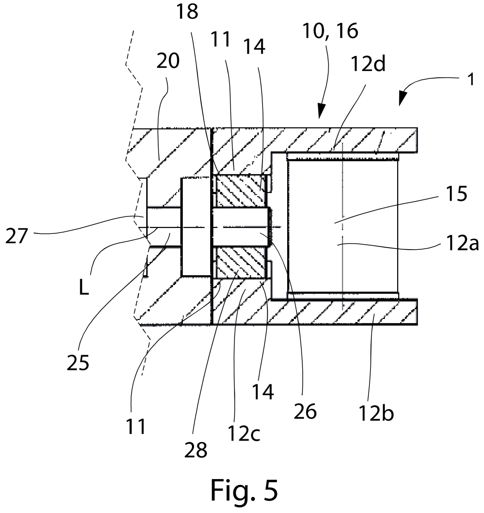

Das Magnetjoch 12, siehe Figur 5, bildet einen Magnetkreis 16, wobei der Magnetkreis 16 quaderförmig mit einem ersten Längsschenkel 12a, einem zweiten Längsschenkel 12b und zwei Querschenkeln 12c und 12d ausgebildet ist.

Der Magnetkreis 16 weist den Luftspalt 18 auf, der zwischen jeweils einem freien Ende 11 des Querschenkels 12c ausgebildet ist. Um den zweiten Querschenkel 12d kann die Erregerspule 15 angeordnet sein, welche bei einer Bestromung einen magnetischen Fluss Φ in dem Magnetkreis 16 induzieren kann.

Das Gehäuse 20 lagert die Welle 25 in einer Längsachse X-X drehbar. Das Gehäuse 20 ist vorzugsweise aus einem nicht-magnetischen Werkstoff z.B. Aluminium hergestellt.

Das Gehäuse 20 ist, wie der Figur 1 entnommen werden kann, unmittelbar benachbart zu dem elektromagnetischen Erregersystem 10 angeordnet, wobei auf der von dem elektromagnetischen Erregersystem 10 abgewandten Seite des Gehäuses 20 der Mitnehmerhebel angeordnet ist.

Auf der von dem elektromagnetischen Erregersystem 10 abgewandten Seite des Gehäuses 20 ist der Mitnehmerhebel 30 und ein Anschlag 40 angeordnet.

Der Anschlag 40 steht frei von dem Gehäuse 20 ab und kann ein Stift oder Bolzen sein, der beispielsweise durch ein Befestigungselement an dem Gehäuse lösbar bzw. wechselbar befestigt werden kann.

Wie in den begleitenden Figuren 2 und 3 angedeutet ist, kann der Anschlag 40 in einer ersten Position und einer zweiten Position an dem Gehäuse 20 angeordnet werden. Zur besseren Unterscheidung wird in den Figuren der Anschlag 40 mit dem Bezugszeichen 40' gekennzeichnet, wenn er in der ersten Position angeordnet ist und mit dem Bezugszeichen 40" gekennzeichnet, wenn er in der zweiten Position angeordnet ist.

Durch die erste Position und die zweite Position können wie später noch detailliert beschrieben werden wird, unterschiedliche Konfigurationen der Shuttleschranke realisiert werden.

Die Welle 25 weist eine Rotationsachse auf, die eine Längsachse L vorgibt. Weiterhin weist die Welle 25 ein erstes Ende 26 und ein zweites Ende 27 auf, wobei der Permanentmagnet 28 und der Mitnehmerhebel 30 drehfest an der Welle 25 angeordnet sind.

An dem ersten Ende 26 der Welle 25 ist der Permanentmagnet 28 angeordnet und an dem zweiten Ende 27 der Mitnehmerhebel 30 drehfest an der Welle 25 angeordnet. Der Mitnehmerhebel 30 kann in einer ersten Befestigungsrichtung oder in einer zweiten Befestigungsrichtung an der Welle 25 angeordnet werden, wie später genauer erläutert werden wird.

Der Permanentmagnet 28 kann einstückig oder aus einer Mehrzahl von Einzelpermanentmagneten beispielswiese aus Neodym oder Ferrit hergestellt sein und ist diametral magnetisiert. Dadurch wird zwischen einem Nordpol und einem Südpol eine Ebene vorgegeben, welche möglichst in der Längsachse L der Welle 25 angeordnet ist.

Der Permanentmagnet 28 ist, siehe Figur 5, in dem Luftspalt 18 angeordnet, wobei der Abstand zwischen dem Permanentmagnet 28 und dem jeweils freien Ende 11 des Magnetjochs in einer Umlaufrichtung der Welle 25 möglichst gleich ist.

Hierzu weisen die beiden freien Enden 11 des Querschenkels 12c, zwischen denen der Luftspalt 18 ausgebildet ist, teilkreisförmige Ausnehmungen auf. Die Teilkreise der teilkreisförmigen Ausnehmungen sind koaxial zu der Längsachse L der Welle 25 angeordnet und weisen einen geringfügig größeren Radius als der diametral magnetisierte Permanentmagnet 28 auf, wodurch im Bereich der teilkreisförmigen Ausnehmungen der Abstand zwischen dem Permanentmagneten 28 und den freien Enden 11 äquidistant sind. Dadurch wird ein guter Flussübergang von dem Permanentmagneten 28 auf das Magnetjoch 10 sichergestellt. Die teilkreisförmige Ausnehmung erstreckt sich jeweils vorzugsweise über einen Teilkreis mit einem Bogenmaß von über 45°.

Der Mitnehmerhebel 30 ist im Wesentlichen stabförmig und weist einen Stabanschnitt 32 und einen Befestigungsabschnitt 34 auf. Der Stabanschnitt 32 steht von dem Befestigungsabschnitt 34 ab, wobei der Befestigungsabschnitt 34 eingerichtet ist mit der Welle 25 verbunden zu werden.

Der Mitnehmerhebel 30 weist eine Nabenbohrung 31 auf, mit der der Mitnehmerhebel 30 auf die Welle 25 aufgesteckt werden kann. Der Mitnehmerhebel 30 kann in einer ersten Befestigungsrichtung und einer zweiten Befestigungsrichtung mit der Welle 25 verbunden werden, wobei in den dargestellten Figuren der Mitnehmerhebel 30 nur in der ersten Befestigungsrichtung an der Welle 25 angeordnet ist.

Zur Befestigung des Mitnehmerhebels 30 können Befestigungsmittel 35 vorgesehen sein, mit denen der Mitnehmerhebel 30 verliersicher an der Welle 25 angeordnet werden kann. Im dargestellten Ausführungsbeispiel ist der Mitnehmerhebel 30 mittels einer im Befestigungsabschnitt 34 angeordneten Schraube an der Welle 25 befestigt.

Der Mitnehmerhebel 30 weist darüber hinaus einen ersten Endanschlag 38 und einen zweiten Endanschlag 39 auf. Der erste Endanschlag 38 und der zweite Endanschlag 39 sind in dem Befestigungsabschnitt 34 beabstandet zu der Längsachse L angeordnet. Der erste Endanschlag 38 und der zweite Endanschlag 39 sind in der Umlaufrichtung der Längsachse L auf sich gegenüberliegenden Seiten angeordnet.

Der erste Endanschlag 38 und der zweite Endanschlag 39 sind eingerichtet mit dem Anschlag 40 zusammenzuwirken, wobei der Winkel zwischen dem ersten Endanschlag 38 und dem zweiten Endanschlag 39 den Winkel vorgibt, um welchen der Mitnehmerhebel verschwenkt werden kann.

Der Mitnehmerhebel 30 kann in einer ersten Lage A und einer zweiten Lage b angeordnet werden, wobei der Mitnehmerhebel 30 in der ersten Lage A und/oder in der zweiten Lage B permanentmagnetisch gehalten werden kann.

In der ersten Lage A liegt der erste Endanschlag 38 an dem Anschlag 40 und in der zweiten Lage B liegt der zweite Endanschlag 39 an dem Anschlag 40 an.

Damit der Mitnehmerhebel 30 von der in den Figuren 1-2 dargestellten ersten Lage A in die zweite Lage B, dargestellt in den Figuren 2 umgeschaltet wirdn, wird die Erregerspule 15 kurzzeitig mit einem Konstantstrom bestromt und der Permanentmagnet 28, die Welle 25 und der Mitnehmerhebel 30 werden um die Längsachse L um ca. 90° in die zweite Lage B verdreht, bis der zweite Endanschlag 39 an dem Anschlag 40 anliegt.

In der ersten Lage A und/oder in der zweiten Lage B wird durch die offenen Pole des Magnetkreises 16 eine magnetische Haltekraft erzeugt, durch die der Mitnehmerhebel 30 in der ersten Lage A und/oder zweiten Lage B gehalten wird.

Zum Zurückschwenken des Mitnehmerhebels 30 von der zweiten Lage B in die erste Lage A wird nun die Erregerspule 15 in die entgegengesetzte Richtung bestromt, wodurch das magnetische Feld in dem Magnetkreis 16 in eine umgekehrte Richtung zeigt und den Permanentmagneten 28, die Welle 25 und den Mitnehmerhebel 30 in die erste Lage A zurückschwenken, bis der erste Endanschlag 38 an dem Anschlag 40 anliegt.

Die Lage A und/oder B des Mitnehmerhebels 30 kann durch einen Sensor 50 überwacht werden.

Der Sensor 50 ist auf der von dem elektromagnetischen Erregersystem 10 angewandten Seite angeordnet und kann beispielsweise ein Hall-Sensor sein.

Der Mitnehmerhebel 30 kann eine Ausnehmung 33 aufweisen, die mit dem mindestens einen Sensor 50 zusammenwirken kann. Beispielsweise kann eine Ausnehmungen 33 zur Bestimmung der ersten Lage A und eine Ausnehmungen 33 zur Bestimmung der zweiten Lage B vorgesehen sein, die über dem mindestens einen Sensor 50 in der ersten Lage A und/oder der zweiten Lage B positioniert ist um sensorisch die erste Lage A und/oder zweiten Lage B zu erfassen.

Eine zweite Konfiguration ist in der Figur 4 gezeigt, wobei im Unterschied zu den bisher beschriebenen Figuren der Mitnehmerhebel 30 in der zweiten Befestigungsrichtung auf der Welle 25 angeordnet ist und der Anschlag 40 in der zweiten Position befestigt ist.

Somit ist in der ersten Konfiguration gemäß den Figuren 1 bis 3 der Mitnehmerhebel 30 in der ersten Lage und in der zweiten Lage spiegelverkehrt zu dem Mitnehmerhebel 30 in der ersten Lage A und in der zweiten Lage B der zweiten Konfiguration angeordnet.

### Bezugszeichenliste

- 1: Shuttleschranke
- 2: Shuttle
- 3: Shuttlesystem
- 10: Erregersystem
- 11: Ende von 12
- 12: Magnetjoch
- 15: Erregerspule
- 16: Magnetkreis
- 17: Magnetjoch
- 18: Luftspalt
- 20: Gehäuse
- 21: Anschlag
- 25: Welle
- 28: Permanentmagnet
- 30: Mitnehmerhebel
- 31: Nabenbohrung
- 32: Stabanschnitt
- 33: Ausnehmung
- 34: Befestigungsabschnitt
- 35: Befestigungsmittel
- 38: erster Endanschlag
- 39: zweiter Endanschlag
- 35: Befestigungsmittel
- 40: Anschlag
- 50: Sensor

- L: Längsachse

## Patentansprüche

1. Shuttleschranke (1) für ein Shuttlesystem (3) umfassend:
- ein elektromagnetisches Erregersystem (10), aufweisend ein Magnetjoch (12) mit einem Luftspalt (18) und eine bestrombare Erregerspule (15)
- ein Gehäuse (20),
- eine Welle (25) mit mindestens einem diametral magnetisierten Permanentmagneten (28) und einem auf der Welle (25) drehfest angeordneten Mitnehmerhebel (30) mit einem ersten Endanschlag (38) und einem zweiten Endanschlag (39),
- wobei die Welle (25) an dem Gehäuse (20) drehbar gelagert ist und den mindestens einen Permanentmagneten (28) in dem Luftspalt (18) angeordnet hält,
- wobei an dem Gehäuse (20) ein Anschlag (40) angeordnet ist, durch den eine Drehung des Mitnehmerhebels (30) von einer ersten Lage (A) in eine zweite Lage (B) begrenzt ist,
- wobei der Mitnehmerhebel (30) in der ersten Lage (A) und in der zweiten Lage (B) permanentmagnetisch gehalten ist und
- wobei in der ersten Lage (A) der erste Endanschlag (38) an dem Anschlag (40) anliegt und in der zweiten Lage (B) der zweite Endanschlag (39) an dem Anschlag (21) anliegt.

2. Shuttleschranke (1) nach Anspruch 1,
**dadurch gekennzeichnet, dass** der Mitnehmerhebel (30) in eine erste Befestigungsrichtung und eine zweite Befestigungsrichtung auf die Welle aufsteckbar ist.

3. Shuttleschranke (1) nach Anspruch 1 oder 2,
**dadurch gekennzeichnet, dass** der Anschlag (40) an dem Gehäuse (20) in einer ersten Position und einer zweiten Position anordnenbar ist.

4. Shuttleschranke (1) nach einem der vorgenannten Ansprüche,
**dadurch gekennzeichnet, dass** in einer ersten Konfiguration der Mitnehmerhebel (30) in der ersten Befestigungsrichtung und Anschlag (40) in der ersten Position angeordnet sind und dass in einer zweiten Konfiguration der Mitnehmerhebel (30) in der zweiten Befestigungsrichtung und Anschlag (40) in der zweiten Position angeordnet sind und dass in der ersten Lage (A) und/oder in der zweiten Lage (B) der Mitnehmerhebel (30) und/oder der Anschlag (40) in der ersten Konfiguration gegenüber der zweiten Konfiguration spiegelverkehrt angeordnet sind bzw. ist.

5. Shuttleschranke (1) nach einem der vorgenannten Ansprüche,
**dadurch gekennzeichnet, dass** der Mitnehmerhebel (30) und das Erregersystem (10) mit dem Permanentmagneten (28) in dem Luftspalt (18) auf gegenüberliegenden Seiten des Gehäuses (20) angeordnet sind.

6. Shuttleschranke (1) nach einem der vorgenannten Ansprüche,
**dadurch gekennzeichnet, dass** der Mitnehmerhebel (30) Befestigungsmittel (35) aufweist, durch die der Mitnehmerhebel (30) auf der Welle (25) befestigbar ist.

7. Shuttleschranke (1) nach einem der vorgenannten Ansprüche,
**dadurch gekennzeichnet, dass** der Anschlag (40) bolzenförmig ist.

8. Shuttleschranke (1) nach einem der vorgenannten Ansprüche,
**dadurch gekennzeichnet, dass** an dem Gehäuse (20) mindestens ein Sensor (50) angeordnet ist, durch den erfasst wird, ob der Mitnehmerhebel (30) in der ersten Lage (A) und/oder der zweiten Lage (B) angeordnet ist.

9. Shuttleschranke (1) nach einem der vorgenannten Ansprüche,
**dadurch gekennzeichnet, dass** der mindestens eine Sensor (50) ein Hall-Sensor ist.

10. Shuttleschranke (1) nach einem der vorgenannten Ansprüche,
**dadurch gekennzeichnet, dass** der mindestens eine Permanentmagnet (28) ein diametral magnetisierter Kreis- oder Ringmagnet ist.

11. Shuttleschranke (1) nach einem der vorgenannten Ansprüche,
**dadurch gekennzeichnet, dass** die diametrale Magnetisierung eine Ebene (E1) zwischen dem Nord- und dem Südpol des mindestens einen Permanentmagneten (28) vorgibt, und dass die Ebene (E1) in der ersten Lage (A) und in der zweiten Lage (B) in einem Winkel (α) geneigt in dem Luftspalt (18) gehalten ist.

12. Shuttleschranke (1) nach einem der vorgenannten Ansprüche,
**dadurch gekennzeichnet, dass** der Winkel (α) der Ebene (E1) zwischen 15° und 75° zu einer Ebene (E2) des Magnetjochs (12) geneigt ist.

13. Shuttleschranke (1) nach einem der vorgenannten Ansprüche,
**dadurch gekennzeichnet, dass** ein Abstand zwischen dem Permanentmagneten (28) und den freien Enden (11) des Magnetjochs (12) in Umlaufrichtung des Permanentmagneten (28) konstant ist.

14. Shuttleschranke (1) nach einem der vorgenannten Ansprüche,
**dadurch gekennzeichnet, dass** das Gehäuse (20) und/oder die Welle (25) aus einem nicht magnetischen Werkstoff hergestellt sind bzw. ist.

15. Shuttle (2) zum Transportieren von Packstücken auf einem Ladebereich mit mindestens einer Shuttleschranke (1) nach einem den vorgenannten Ansprüche.

16. Shuttle (2) nach Anspruch 15,
**dadurch gekennzeichnet, dass** mindestens eine Teleskopschiene vorgesehen ist, an deren freiem Ende die mindestens eine Shuttleschranke (1) angeordnet ist.
